# EUROPEAN PATENT SPECIFICATION

(11) **EP 3 048 665 B1**
(45) Date of publication and mention of the grant of the patent: **27.04.2022**
(21) Application number: 15305071.1
(22) Date of filing: 23.01.2015
(51) Int. Cl.: H01Q 1/12, H01Q 21/00, H01Q 1/18, H01Q 3/22, H01Q 21/06

(54) **Point to point network node beam steering**
Punkt-zu-Punkt-Netzwerkknotenstrahlsteuerung
Noeud de réseau point à point et d'orientation de faisceau

(43) Date of publication of application: 27.07.2016
(73) Proprietor: Alcatel Lucent, 91620 Nozay (FR)
(72) Inventor: Pivit, Florian, Dublin, 15 (IE); Gimersky, Martin, Dublin, 15 (IE)
(74) Representative: Coghlan, Judith Elizabeth Kensy

(56) References cited:
- WO-A1-2012/161612
- WO-A1-2014/203236
- US-A- 3 017 630
- US-A1- 2007 273 599
- US-A1- 2009 033 576

## Description

### FIELD OF THE INVENTION

Aspects and embodiments described may provide a method of counteracting misalignment caused by movement of at least one node supporting a communication link in a point to point communication network, a computer program product and network node operable to perform that method.

### BACKGROUND

Point to point radio communication techniques are known. According to such techniques, a radio communication link may be established between antennas. One problem in millimetre-wave point-to-point communication links is the alignment of the link. Typical regulatory requirements are such that high-gain antennas, with peak-gain values between 30 dBi and 40 dBi, are used on either end of the link, which means that the 3-dB beamwidths of such antennas are small (*δ* = 3° or less). Consequently, even a small misalignment between the two antennas at either end of the link leads to a large loss in link budget and the link is likely to fail. Such misalignment is commonly caused by antenna mounting pole movement. That movement may be induced by wind and the resulting movement is relatively fast, for example, physical swaying. Misalignment may also be caused by thermal-expansion effects. The characteristics of such thermal misalignment can include that it occurs relatively slowly as, for example, the antenna support flexes. Remote ends of communication links are particularly vulnerable to such misalignment issues since stable mounting is not always possible, for example, on top of a mast or on a residential rooftop. It is, therefore, desirable to provide a point to point communication system with a mechanism which can address misalignment issues. WO2014/203236 discloses a millimetre wave system with a complex beam direction system to enable point to point or point to multiple point communication. Multiple RFICs and antennas are used and the system selects between them to transmit signals in different directions. US3017630 relates to the field of radar where a broad beam is transmitted across a plane and reflections indicative of obstructions to the beam are detected. Three different frequencies are used in different pulses and the system has resonant chambers to detect reflections of each of the these different frequencies. Thus, where the frequency varies from the centre frequency of the resonant chamber, it is corrected. Where the radar is mounted on a ship and where the ship is moving significantly then a means of compensating for this has been devised in which the same mechanism for generating beams in different directions is used to compensate for the movement. In this regard one of the three frequencies can be selected to select a particular direction of the beam.

US2009/0033576 relates to a search and adjust algorithm to find the right direction in which an antenna needs to be re-aligned. A position controller is used to rotate the antenna in both the elevation and azimuth angles to provide the required direction.

US3017630 discloses a frequency scan to counteract misalignement of an antenna array and to achieve a stable pointing direction of an antenna beam.

### SUMMARY

A first aspect provides a method according to claim 1.

The first aspect recognises that it may be desirable to provide a point to point communication system with a mechanism which can operate to adjust a beam direction, at least at one end of a radio link, in a manner which allows for counteraction of normal occurrences of changes of antenna orientation. In other words, a mechanism which can counteract changes of antenna orientation with appropriate changes of beam direction. Such a mechanism may operate such that counteraction can occur in real time.

The first aspect recognises that some techniques which could be used to implement a change in beam direction, such as mechanical beam steering and/or use of digital and analogue beamforming array antennas, may not be appropriate for use when compensating for physical misalignment of antennas in a point to point radio network.

In particular: mechanical beam steering typically requires provision of moving components and motors which can be prone to failure, increase cost and size of a point to point communication deployment and may operate too slowly to compensate for fast antenna movements such as the swaying of an antenna mounting pole in strong winds. Digital or analog beamforming array antennas with multiple transmitters are typically fast and very effective and well able to compensate even for fast mechanical sway, but such deployments are also typically very expensive due to the use of multiple transmitters and complex antenna arrays containing phase shifters or switch networks.

The first aspect recognises that it is possible to steer the main beam of an array antenna by shifting the signal frequency (or wavelength, such shifts being equivalent). In a point to point network operating within, for example, a region of relatively large available bandwidth, beam steering to compensate for physical misalignment may prove useful. For example, a point to point communication network may operate in the available spectrum for millimetre-wave backhaul in the 60- or 70-GHz band. Frequency shifting to achieve beam steering within such available spectrum may allow for compensation of typical physical misalignment between line of sight point to point antennas. The mechanism of the first aspect may be combined with a suitable regulating algorithm, and used to effectively counteract the swaying and/or flexing of an antenna mounting pole.

A first aspect provides a method of counteracting misalignment caused by movement of at least one node supporting a communication link in a point to point communication including all method steps set out in claim 1.

The first aspect recognises that the most critical direction of sway is often that which occurs in the forward-backward direction, since such motion directly displaces the antenna beam in elevation. Even a small displacement can bring about a large change in the direction of the antenna beam. In most communication links, a sway (elevation-change) angle *α* of an antenna array support for example, a support pole, which is larger than, for example, a typical beamwidth angle *δ*, is likely to lead to a loss or failure of a communication link.

The first aspect recognises that it may be possible to counteract for a pole-sway or -flex induced change of beam direction by means of electronic beam steering. That beam steering can be achieved by shifting the phase of radiating elements in an antenna array. In particular, in a physically fixed antenna array in which components are static, the phase of radiating elements can be shifted, resulting in beam steering, by altering a signal feed frequency or wavelength.

According to one embodiment, arranging the radiating elements to be spaced apart in accordance with a pre-selected centre signal feed wavelength comprises: spacing the adjacent radiating elements by a half of the pre-selected wavelength. According to one embodiment, arranging the radiating elements to be spaced apart in accordance with a pre-selected centre signal feed wavelength comprises: arranging the plurality of radiating elements in a plurality of rows and columns. As described above, it will be appreciated that other antenna array element spacing is possible and, in some arrangements, may be chosen so that the antenna beam direction when nodes supporting the communication link are "aligned" is not substantially perpendicular to a surface of the antenna array.

According to one embodiment, arranging a signal feed line to feed a signal to the radiating elements such that, at the pre-selected wavelength, the antenna array beam direction is perpendicular to a surface of the substantially planar antenna array comprises: providing the rows with a serial signal feed arranged such that a delay of an integer number of wavelengths at the pre-selected wavelength is introduced between adjacent rows; and providing a parallel signal feed within each row arranged such that, at the pre-selected wavelength, no delay is introduced between radiating elements in any given row.

Accordingly, a general array architecture with a serial and parallel feed structure can be provided. In one possible arrangement, radiating element spacing of approximately λ/ 2 is assumed in both vertical and horizontal directions. In one particular example, a patch-antenna array can be assumed. In the horizontal direction, the signal-distribution network is of a parallel nature, while the signal distribution in vertical direction is of a serial nature. Such an arrangement results in the following effect: at a given selected "central frequency" at which the electrical distance between any two adjacent branch points of the central feeder line (thus also between adjacent rows of radiating elements) is exactly λ (a delay line of appropriate length is used in the feed line), there is no phase shift from one row of radiating elements to the next. As a result, at that frequency, the antenna beam direction is perpendicular to the array surface. If the frequency of the carrier is shifted, since the physical components of the array are fixed, the change in frequency results in a consequent change of the relative phase from one row of radiating elements to the next row. As a result of the serial nature of the vertical (central-feeder) signal distribution, a frequency shift of the carrier leads to a constant phase shift from one horizontal row of radiating elements to the next, but has no impact on the parallel signal distribution in the horizontal direction. Consequently, a shift in the carrier frequency brings about an antenna beam tilt in elevation (the vertical direction), but no tilt is introduced in azimuth (the horizontal direction). The mechanism can be used to counteract the beam displacement in elevation caused by the backward-forward (elevation) sway of the antenna.

According to one embodiment, arranging the signal feed line comprises: providing stripline across rows of radiating elements and a connection via to a parallel signal feed at each row. Accordingly, if a signal feedline is implemented using stripline technology (whether suspended or solid-substrate stripline), a connection via to the parallel part of the signal-distribution network can be utilized.

According to one embodiment, arranging the serial signal feed line comprises: providing a slotted waveguide in which an integer wavelength delay at the pre-selected wavelength is achieved between adjacent coupling slots. Accordingly, if implemented using waveguide technology, a serial waveguide can be loaded with a dielectric material to achieve the required 360° phase difference between adjacent coupling slots. Alternatively, other delay-line technologies (for example, ridged waveguides, meandered waveguides and similar) can be used.

According to one embodiment, the adjustment to the feed signal wavelength steers elevation of said antenna array beam direction to counteract vertical sway of the at least one node supporting the communication link.

According to one embodiment, the supported communication link in a point to point communication network comprises: a link supported within a millimetre wavelength band having high gain and a narrow beam spread. Accordingly, some arrangements recognise that, in relation to point to point communication, a popular frequency band for the communication links is the 60-GHz band. That band is license-free provided that those operating within the band ensure that their radiated power does not exceed a specified limit and provided that the antenna gain is at least 35 dBi. The unlicensed 60-GHz frequency band ranges from 57-GHz to 63-GHz, providing a total bandwidth of 6 GHz. For state-of-the-art digital modulation schemes of up to 1024-QAM, the spectral efficiency reaches up to 10 b/ Hz/ s. In such a case, the required bandwidth to transmit at a data rate of 1000 Mbps (which is a typical requirement for microwave backhaul solutions) is 100 MHz; which is a narrow part of the total available bandwidth of 6 GHz. Some arrangements may use the large available absolute bandwidth of 6 GHz, as opposed to the rather narrow required band of 100 MHz, to some advantage in relation to achieving desired beam steering. Namely, by changing the carrier frequency of a signal and combining this with a suitable antenna design, a full compensation of the beam misalignment can be achieved.

According to one embodiment, the communication link comprises: a time division duplexed link, on which forward and reverse data traffic uses the same antenna array arranged in accordance with the same pre-selected wavelength. According to one embodiment, the communication link comprises: a frequency division duplexed link, on which forward and reverse data traffic use different antenna arrays, each arranged in accordance with a different pre-selected wavelength. Accordingly, some embodiments recognise that if operating in frequency-division duplexing (FDD) mode, an uplink channel can be separated from a downlink channel in frequency, meaning available bandwidth is divided between forward and reverse channels and that two transceiver antenna arrays may be required, one for each channel. Shifting of one beam may be implemented independently of any shift in the other beam. If operating in time-division duplexing (TDD) mode, an uplink channel is not separated from a downlink channel in frequency, but instead is separated in time slots. The general principle described can be implemented successfully in relation to both FDD and TDD implementations of point to point communication networks. In general, it may be appreciated that a mechanism in accordance with described arrangements is likely to leverage more out of TDD implementations than FDD implementations, since it is typically easier to adapt TDD implementations to allow for different data rates in the forward and reverse links. Also, it is easier to determine the frequency at which, for example, a fixed end of a point to point communication link has to transmit in order to fall into the main-beam of the swaying antenna: the reverse link is transmitting at the same frequency as the forward link.

According to one embodiment, the method comprises: determining how to adjust the centre signal feed wavelength by: transmitting a test signal across a range of wavelengths from a network node supporting the communication link; and awaiting receipt of an indication of a signal feed wavelength to use from another network node supporting the communication link, that indication being generated in response to the test signal. Accordingly, in order to determine an appropriate or "correct" carrier frequency or wavelength on which to transmit, a test sweep over the whole available bandwidth or a continuous wave pulse train at a number of possible carrier frequencies can be transmitted (e.g. every 100MHz). That test sweep can be transmitted from, for example, a first node, over the reverse link and a receiver at a second node supporting the communication link may be operable to determine the frequency at which the received signal was strongest. That strongest received frequency can then be set as the carrier frequency at the transmitting node/ antenna array for the remaining time of a transmit period, T. The indication to the first transmitting node of the correct frequency may be that the target "correct" frequency is used by the original receiving node/ antenna array as carrier-frequency on a forward link. In some arrangements, before every data-transmission a short sequence may be transmitted on a forward link to set the transceiver there to a target "correct" frequency/wavelength. Such an approach can reduce the required computational complexity at a remote end of a point to point communication link. If implemented as described above, the remote end of the point to point link operates only to generate a test-chirp and receive a configuration sequence from the fixed end of the link in order to set the required frequency.

According to one embodiment, the method comprises: transmitting the test signal periodically, the periodicity being configurable in response to determined local movement parameters of the at least one network node supporting the communication link. Such an arrangement recognises that a test signal or test chirp can be transmitted on a reverse link on a regular interval T that can be adapted in length to the local conditions, for example, rather fast corrections due to wind-load or rather slow corrections due to thermal expansion, settling of mast-infrastructure over time etc.

A second aspect provides: a computer program product according to claim 14.

A third aspect provides: a network node according to claim 13.

According to one embodiment, the radiating elements are arranged such that the adjacent radiating elements are spaced apart by a half of the pre-selected wavelength. According to one embodiment, the radiating elements are spaced apart in accordance with a pre-selected centre signal feed wavelength and arranged in a plurality of rows and columns.

According to one embodiment, a signal feed line is arranged to feed a signal to the radiating elements such that, at the pre-selected wavelength, the antenna array beam direction is perpendicular to a surface of the substantially planar antenna array, and the rows are provided with a serial signal feed arranged such that a delay of an integer number of wavelengths at the pre-selected wavelength is introduced between adjacent rows; and a parallel signal feed is provided within each row arranged such that, at the pre-selected wavelength, no delay is introduced between radiating elements in any given row.

According to one embodiment, the signal feed line comprises: stripline provided across rows of radiating elements and a connection via to a parallel signal feed at each row. According to one embodiment, the serial signal feed line comprises: a slotted distribution waveguide in which an integer wavelength delay at the pre-selected wavelength is achieved between adjacent coupling slots.

According to one embodiment, adjuster to the feed signal wavelength is configured to steer elevation of the antenna array beam direction to counteract vertical sway of the at least one node supporting the communication link.

According to one embodiment, the supported communication link in a point to point communication network comprises: a link supported within a millimetre wavelength band having high gain and a narrow beam spread.

According to one embodiment, the communication link comprises: a time division duplexed link, on which forward and reverse data traffic uses the same antenna array arranged in accordance with the same pre-selected wavelength.

According to one embodiment, the communication link comprises: a frequency division duplexed link, on which forward and reverse data traffic use different antenna arrays, each arranged in accordance with a different pre-selected wavelength.

According to one embodiment, the network node comprises: determination logic operable to determine how to adjust the centre signal feed wavelength by: transmitting a test signal across a range of wavelengths from a network node supporting the communication link; and awaiting receipt of an indication of a signal feed wavelength to use from another network node supporting the communication link, that indication being generated in response to the test signal.

According to one embodiment, the determination logic is configured to: transmitting the test signal periodically, the periodicity being configurable in response to determined local movement parameters of the at least one network node supporting the communication link.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically effects of antenna sway in different directions;
Figure 2 illustrates schematically beam steering by phase shift in an array to compensate for sway of antenna pole in elevation;
Figure 3(a) illustrates schematically frequency spectrum utilization for FDD communication links;
Figure 3(b) illustrates schematically frequency spectrum utilization for TDD communication links;
Figure 4(a) illustrates schematically a general radio architecture for FDD communication links;
Figure 4(b) illustrates schematically a general radio architecture for TDD communication links;
Figure 5 illustrates a general array architecture with a serial and parallel feed structure;
Figure 6 illustrates impedance transformation in a serial signal-distribution network;
Figure 7 shows two possible implementations of serial signal-distribution networks in stripline and waveguide technologies;
Figure 8 shows correspondence between antenna beam direction in elevation and utilized frequency spectrum; and
Figure 9 is a table illustrating a possible timing sequence for determination and setting of carrier frequency f_{C} for one TDD application.

### DESCRIPTION OF THE EMBODIMENTS

Before discussing the embodiments in any more detail, first an overview will be provided:
Aspects recognise that it is possible to steer the main beam of an array antenna by shifting the signal frequency. In a point to point network operating within, for example, a region of relatively large available bandwidth, beam steering to compensate for physical misalignment may prove useful. For example, a point to point communication network may operate in the available spectrum for millimetre-wave backhaul in the 60- or 70-GHz band. Frequency shifting to achieve beam steering within such available spectrum may allow for compensation of typical physical misalignment between line of sight point to point antennas. The mechanism of described aspects may be combined with a suitable regulating algorithm and used to effectively counteract the swaying and flexing of an antenna mounting pole.

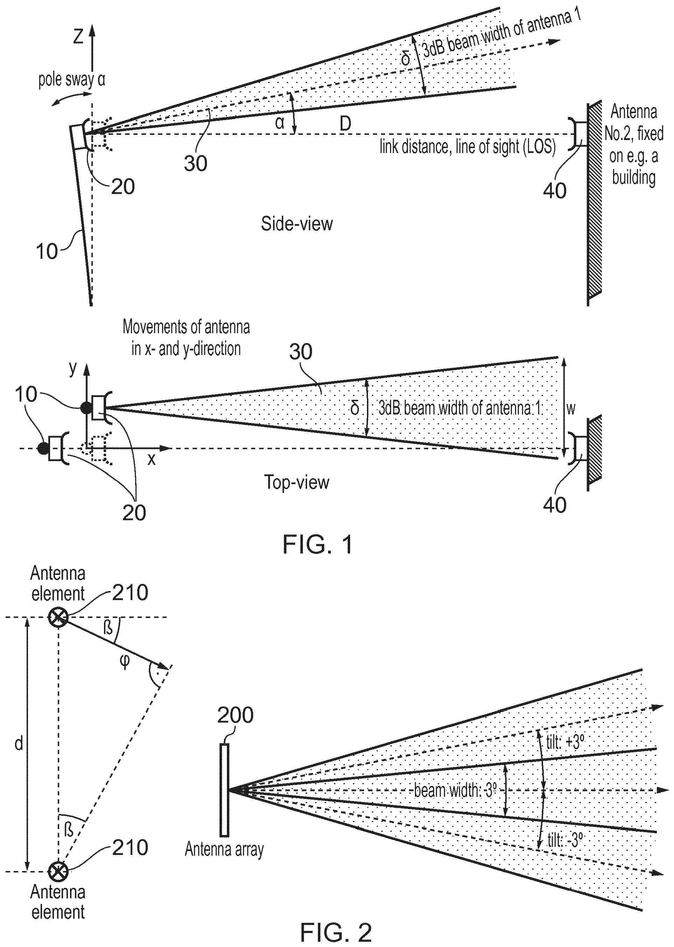

Figure 1 shows schematically typical sway mechanisms of a pole 10 on which a point to point antenna 20 is mounted. Typically a millimetre-wave antenna is mounted on a tubular pole. Such a pole 10 is very resilient against the torque motions of the pole along its axis, that is, rotations about the z-axis and the only significant motions of the antenna are lateral (left-right) and forward-backward sways. As shown schematically, lateral sway, causing an antenna 20 displacement in the y-direction, does not usually have an impact on a point to point line of sight communication link, provided that induced lateral displacement is lower than the diameter w of the antenna beam cone 30 at the location of the other point to point antenna 40. For link distances D of hundreds of meters, the value of w spans several meters at the location of the other antenna 40 *(w* = 2sin *δ*/*2* ^{∗} *D*). For example, for a distance between two point to point antennas of 100 m and a 3-dB beamwidth of 3°, w = sin 3° x 100 m = 5.2 m. That is to say, a typical lateral (left-right) sway of an antenna pole 10 of perhaps 0.3m is unlikely to have any appreciable impact. In other words, since the antenna beam dislocation in the y-direction at the location of the other antenna 40 will not, for all practical purposes, exceed several tens of centimetres, the link is unlikely to fail, because the second antenna 40 remains within the coverage region of the beam.

The most critical direction of sway is that which occurs in the forward-backward direction, since such motion directly displaces the antenna beam 30 in elevation. Even a small displacement can bring about a large change in the direction of the antenna beam 30. In most communication links, a sway (elevation-change) angle *α* of the pole 10 which is larger than, for example, the 3-dB beamwidth angle *δ*, will lead to a loss or failure of the communication link as illustrated at the top of Figure 1. For example, a forward-backward sway-induced x-direction displacement of an antenna 20 on top of a 3-m tall pole of only 15 cm corresponds to a beam elevation change of 3°. That elevation change would lead to a loss of the link for antennas whose beamwidths are 3° or less.

Arrangements recognise that it maybe possible to counteract for a pole-sway or -flex induced change of beam direction by means of electronic beam steering. That beam steering can be achieved by shifting the phase of radiating elements 210 in an antenna array 200, as shown schematically in Figure 2.

Figure 2 shows that for a signal path-length change from one antenna array element 210 to the next of ϕ, in terms of the signal wavelength *λ*, a tilt of the beam by angle *β* results.

As shown in Figure 2, for an array element 210 separation of *d* = *λ*/ 2 and given the typical frequencies used for point to point microwave communication, a phase shift of approximately +9.4° or -9.4° from one array element 210 to the next is required in order to tilt the beam by 3° down or up.

Such a phase shift can be achieved by use of complex phase shifters, and arrangements described in more detail below provide an alternative to such an approach in relation to the usually used frequencies (in the range of 60 to 70 GHz) for such point to point links. Another approach to which arrangements provide an alternative is that of digital beamforming, requiring multiple transmitters, which would be a costly solution.

Some arrangements described further below recognise that, in relation to point to point communication, a popular frequency band for the communication links is the 60-GHz band. That band is license-free provided that those operating within the band ensure that their radiated power does not exceed a specified limit and provided that the antenna gain is at least 35 dBi. The unlicensed 60-GHz frequency band ranges from 57-GHz to 63-GHz, providing a total bandwidth of 6 GHz. For state-of-the-art digital modulation schemes of up to 1024-QAM, the spectral efficiency reaches up to 10 b/ Hz/ s. In such a case, the required bandwidth to transmit at a data rate of 1000 Mbps (which is a typical requirement for microwave backhaul solutions) is 100 MHz; which is a narrow part of the total available bandwidth of 6 GHz. Some arrangements described further below use the large available absolute bandwidth of 6 GHz, as opposed to the rather narrow required band of 100 MHz, to some advantage in relation to achieving desired beam steering. Namely, by changing the carrier frequency of a signal and combining this with a suitable antenna design, a full compensation of the beam misalignment can be achieved. That compensatory beam steering can be achieved without phase shifters. Desired beam steering can be achieved by shifting the carrier frequency appropriately and can be implemented using programmable phase-locked loops (PLL's), a standard component in modern communication technology.

### FDD Operation

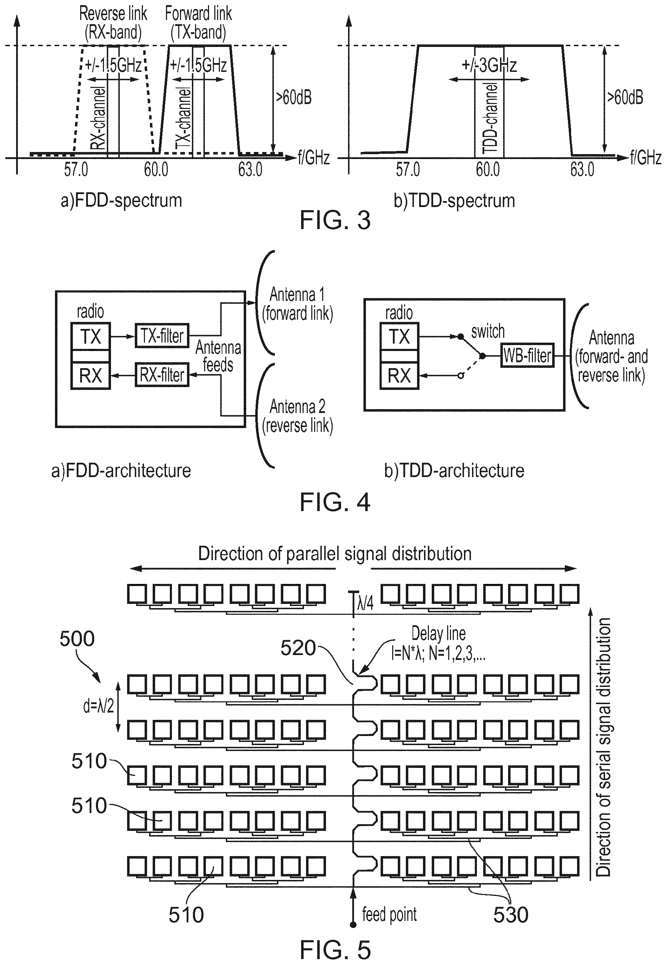

Figure 3(a) illustrates schematically frequency spectrum utilization for FDD communication links. If operating in frequency-division duplexing (FDD) mode, an uplink channel can be separated from a downlink channel in frequency, for example, the frequency band of 57-60 GHz can be used for a forward link and the band of 60-63 GHz can be used for a reverse link. Such a configuration can provide in the region of 3 GHz of bandwidth for each link, meaning each channel (forward and reverse) can be shifted by up to ±1.5GHz. Of course, whilst a guard band will typically be required; the extent of such a guard band depends on the utilized filter technology and the link budget and, for the purpose of explaining the general mechanism, can be neglected since the guard band will require only a fraction of the available 6 GHz of electromagnetic spectrum.

Figure 4(a) depicts schematically a general radio architecture to support a FDD mode of operation.

### TDD Operation

Figure (b) illustrates schematically frequency spectrum utilization for TDD communication links. If operating in time-division duplexing (TDD) mode, an uplink channel is not separated from a downlink channel in frequency, but instead is separated in time slots.

Figure 4(b) depicts schematically a general radio architecture to support a time-division duplexing (TDD) mode of operation..

Figure 5 illustrates a general array architecture 500 with a serial 520 and parallel 530 feed structure. Radiating element 510 spacing of approximately *λ*/ 2 is assumed in both vertical and horizontal directions. This is a common configuration for linearly-polarized patch or slotted-waveguide antenna arrays. In the particular example shown, a patch-antenna array is assumed for easier depiction of the mechanism in accordance with described arrangements, namely: in the horizontal direction, the signal-distribution network 530 is of a parallel nature, while the signal distribution 520 in vertical direction is of a serial nature. Such an arrangement results in the following effect: at a given selected "central frequency" at which the electrical distance between any two adjacent branch points of the central feeder line (thus also between adjacent rows of radiating elements) is exactly λ (a delay line of appropriate length is used in the feed line), there is no phase shift from one row of radiating elements to the next. As a result, at that frequency, the antenna beam direction is perpendicular to the array surface. If the frequency of the carrier is shifted, since the physical components of the array 500 are fixed, the change in frequency results in a consequent change of the relative phase from one row of radiating elements 510 to the next row. As a result of the serial nature of the vertical 520 (central-feeder) signal distribution, a frequency shift of the carrier leads to a constant phase shift from one horizontal row of radiating elements to the next, but has no impact on the parallel signal distribution 530 in the horizontal direction. Consequently, a shift in the carrier frequency brings about an antenna beam tilt in elevation (the vertical direction in Figure 5), but no tilt is introduced in azimuth (the horizontal direction in Figure 5). The mechanism can be used to counteract the beam displacement in elevation caused by the backward-forward (elevation) sway of the antenna, described previously in relation to Figure 1.

As a specific example, assume a centre frequency of 60 GHz. A frequency shift of 1 GHz corresponds to a shift in the phase length between the rows of antenna radiating elements of (360° / 60 GHz)^{∗}1GHz = 6°. As previously calculated, a phase shift of 9.4° is required to tilt the beam by 3° in elevation for an element spacing of *λ*/ 2. Therefore, with a frequency change of ±1.5 GHz of the carrier frequency, a consecutive phase shift of the applied phase from one row of radiating elements to the next would be ±9°, resulting in a beam tilt ±2.9°. This is enough beam-steering capability to provide a nearly three times wider effective angular (elevation) span of the beam compared to a fixed-beam antenna.

In summary, the proposed arrangements described can use the property of antenna beam scan-angle dependence on frequency in series-fed antenna arrays to tackle a new problem, namely that of compensation for misalignment of antenna in point to point communications. As demonstrated quantitatively above, the property of antenna beam scan-angle dependence on frequency in series-fed antenna arrays is ideally suited to counteraction of antenna pole sway at frequencies of 60GHz and higher due to the achievable beam scan angle values.

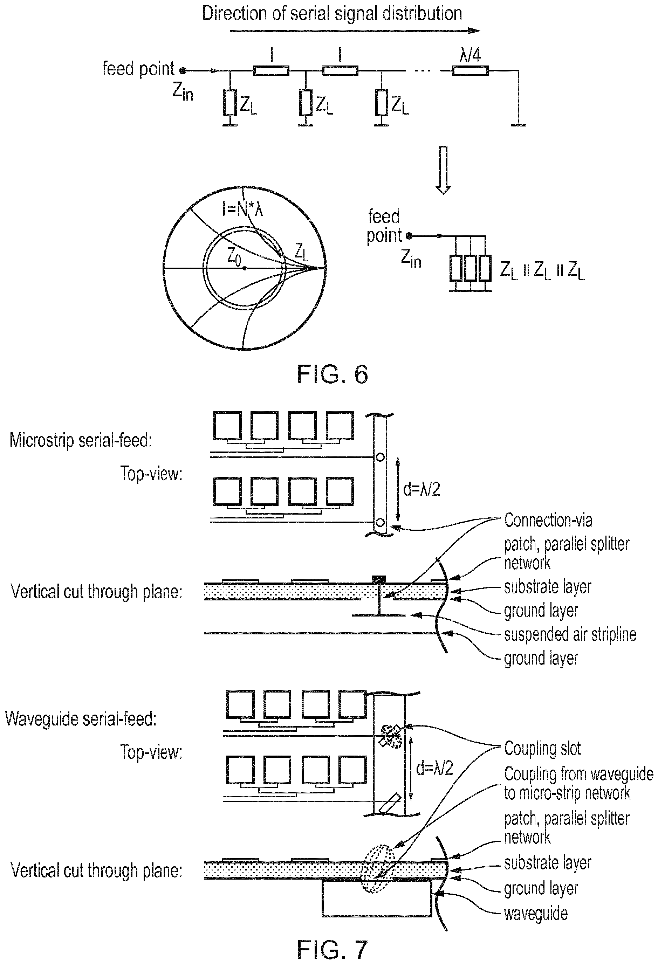

Figure 6 illustrates impedance transformation in a serial signal-distribution network. In particular, Figure 6 depicts the feasibility of a serial signal-distribution from the point of view of required input impedance. This concept has been proven in relation to slotted-waveguide antenna arrays, for example. By serially connecting a number of load resistors using A-long sections of transmission line, load resistors can be viewed as transformed into a network of parallel loads; therefore the overall input impedance can be easily matched to the transmitter and the amount of power applied to each branch, (i.e., each row of array radiating elements) is identical.

Possible implementations of the serial part of the signal-distribution network are shown schematically in Figure 7. If implemented using stripline technology, whether suspended or solid-substrate stripline, a connection via to the parallel part of the signal-distribution network is utilized. If implemented using waveguide technology, a serial distribution waveguide can be loaded with a dielectric material to achieve the required 360° phase difference between adjacent coupling slots. Alternatively, other delay-line technologies (for example, ridged waveguides, meandered waveguides and similar) can be used.

### FDD and TDD compatibility

The general principle described can be implemented successfully in relation to both FDD and TDD implementations of point to point communication networks.

FDD: Since the antenna array needs to be "anchored" via its physical construction to a so-called centre frequency, two separate antenna arrays, one for the forward link and one for the reverse link, are provided.

TDD: According to such an implementation, the same antenna array can be used for both forward and reverse links. This is because, in relation to the uplink and downlink, the same centre frequency is used, and the forward and backward links are separated in time by switching the antenna between the transmit (TX) and receive (RX) branches. TDD implementations would typically allow, for a given unlicensed portion of spectrum, a much larger relative phase shift, since the possible frequency shift is twice as large (in the 60GHz example recited above, ±3 GHz instead of ±1.5 GHz), so that the antenna beam scan angle can also be nearly twice as large.

In general, it may be appreciated that a mechanism in accordance with described arrangements is likely to leverage more out of TDD implementations than FDD implementations, since it is typically easier to adapt TDD implementations to allow for different data rates in the forward and reverse links. Also, it is easier to determine the frequency at which, for example, a fixed end of a point to point communication link has to transmit in order to fall into the main-beam of the swaying antenna: the reverse link is transmitting at the same frequency as the forward link.

### Selection of appropriate frequency

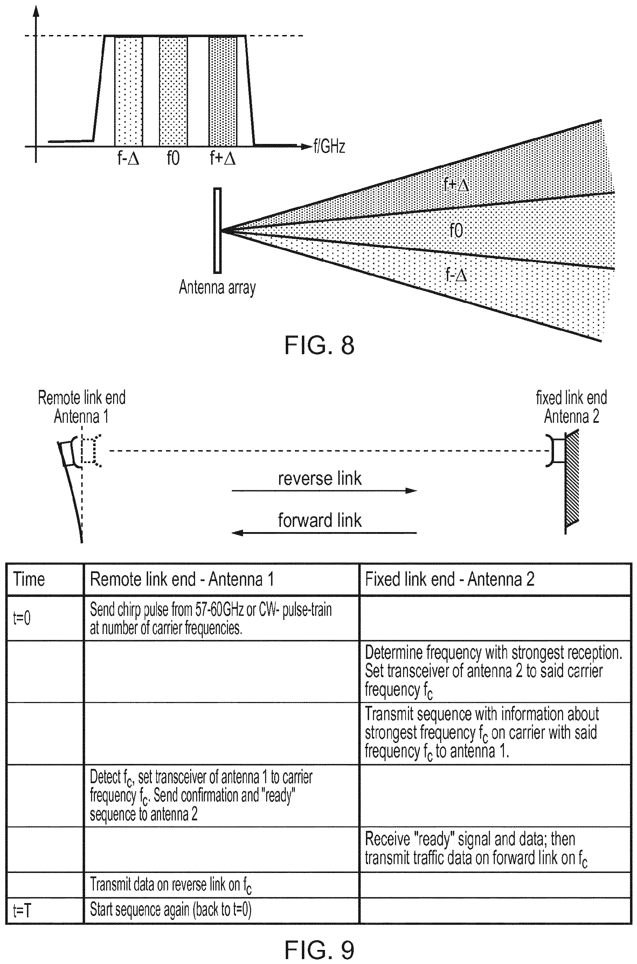

Figure 9 is a table illustrating a possible timing sequence for determination and setting of carrier frequency f_{C} for one TDD application. In order to determine an appropriate or "correct" carrier frequency on which to transmit, a test sweep over the whole available bandwidth from 57GHz to 63GHz or a continuous wave pulse train at a number of possible carrier frequencies can be transmitted (e.g. every 100MHz). That test sweep can be transmitted from, for example, antenna 1, over the reverse link and a receiver at antenna 2 determines the frequency at which the received signal was strongest. That strongest received frequency can then be set as the carrier frequency f_{c} for the remaining time of a transmit period, T. The frequency f_{c} is used as carrier-frequency on the forward link. Before every data-transmission a short sequence can be transmitted on the forward link to antenna 1 to set the transceiver there to f_{c}. Such an approach can reduce the required computational complexity at a remote end of a point to point communication link. If implemented as described above, the remote end of the point to point link operates only to generate a test-chirp and receive a configuration sequence from the fixed end of the link in order to set the required frequency. The test chirp is transmitted on the reverse link on a regular interval T that can be adapted in length to the local conditions, for example, rather fast corrections due to wind-load or rather slow corrections due to thermal expansion, settling of mast-infrastructure over time etc.

A similar sequence can be implemented in relation to FDD point to point configurations, but instead of setting only one f_{c}, the two separate carriers for reverse and forward link are set, with a given fixed separation that is equal to half of the total bandwidth (in the examples described herein, 3GHz).

For illustrative purposes, Figure 8 shows the correspondence between the antenna beam direction in elevation and utilized frequency spectrum.

Techniques and methods may provide a beam steering solution which can requires only a single transmitter and a single receiver and no further complex components such as, for example, switches, phase shifters, mechanical tilt mechanisms or other active devices. Alternatice approaches may require either: a multitude of transceivers, phase shifters or switches (which are expensive) or mechanical tilt mechanisms (which may be too slow for practical purposes). Techniques and methods may be controlled fully in the digital domain by changing the center frequency of the transmission channel; thus providing an inexpensive solution offering a very short response time. Techniques and methods are based on the property of antenna beam scan-angle dependence on frequency in series-fed antenna arrays. With constantly rising demand for fast-deployable and low-cost microwave links and very high link availability, more advanced, self-aligning and electronically steerable millimeter-wave links are required. The presented techniques and methods are not limited to backhaul or fronthaul applications and may also be of interest to potential applications in 5G access systems. Whilst other designs are possible, their applicability may prove limited in the communications market, because of their prohibitively large cost and complexity. Techniques and methods may provide a beam steering arrangement that requires only one transceiver, in which the only influenceable parameter in terms of antenna functionality is the frequency of operation. Other approaches require multiple transceivers and/or phase shifters.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of counteracting misalignment caused by movement of at least one node (20, 40) supporting a communication link in a point to point communication network, said method comprising:
providing a substantially planar antenna array (200; 500) comprising a plurality of radiating elements (210; 510);
arranging said radiating elements (210; 510) to be spaced apart in accordance with a pre-selected centre signal feed wavelength;
arranging a signal feed line to feed a signal to said radiating elements (210; 510) such that, at said pre-selected wavelength, said antenna array beam direction is perpendicular to a surface of said substantially planar antenna array (200; 500);
receiving from another network node (20, 40) supporting said communication link an indication that misalignment caused by said movement of at least one node (20, 40) supporting said communication link in a point to point communication network is occurring, said indication comprising an indication of a signal feed wavelength to use; and
adjusting said centre signal feed wavelength in dependence upon said indication to steer said antenna array beam direction to counteract said movement of said at least one node (20, 40) supporting said communication link.

2. A method according to claim 1, wherein arranging said radiating elements (210; 510) to be spaced apart in accordance with a pre-selected centre signal feed wavelength comprises: spacing said adjacent radiating elements (210; 510) by a half of said pre-selected wavelength.

3. A method according to claim 1 or claim 2, wherein arranging said radiating elements (210; 510) to be spaced apart in accordance with a pre-selected centre signal feed wavelength comprises: arranging said plurality of radiating elements (210; 510) in a plurality of rows and columns.

4. A method according to claim 3, wherein arranging a signal feed line to feed a signal to said radiating elements (210; 510) such that, at said pre-selected wavelength, said antenna array beam direction is perpendicular to a surface of said substantially planar antenna array (200; 500) comprises:
providing said rows with a serial signal feed (520) arranged such that a delay of an integer number of wavelengths at said pre-selected wavelength is introduced between adjacent rows; and providing a parallel signal feed (530) within each row arranged such that, at said pre-selected wavelength, no delay is introduced between radiating elements in any given row.

5. A method according to claim 4, wherein arranging said signal feed line comprises: providing stripline across rows of radiating elements and a connection via to a parallel signal feed (520) at each row.

6. A method according to claim 4, wherein arranging said serial signal feed line (520) comprises: providing a slotted distribution waveguide in which an integer wavelength delay at said pre-selected wavelength is achieved between adjacent coupling slots.

7. A method according to any preceding claim, wherein said adjustment to said feed signal wavelength steers elevation of said antenna array beam direction to counteract vertical sway of said at least one node (20, 40) supporting said communication link.

8. A method according to any preceding claim, wherein said supported communication link in a point to point communication network comprises: a link supported within a millimetre wavelength band having high gain and a narrow spread beamwidth.

9. A method according to any preceding claim, wherein said communication link comprises a time division duplexed link, on which forward and reverse data traffic uses the same antenna array arranged in accordance with the same pre-selected wavelength.

10. A method according to any one of claims 1 to 8, wherein said communication link comprises a frequency division duplexed link, on which forward and reverse data traffic use different antenna arrays, each arranged in accordance with a different pre-selected wavelength.

11. A method according to any preceding claim, wherein said method comprises:
determining how to adjust said centre signal feed wavelength by:
transmitting a test signal across a range of wavelengths from a network node (20, 40) supporting said communication link; and
awaiting receipt of an indication of a signal feed wavelength to use from another network node (20, 40) supporting said communication link, said indication being generated in response to said test signal.

12. A method according to claim 11, wherein said method comprises:
transmitting said test signal periodically, said periodicity being configurable in response to determined local movement parameters of said at least one network node (20, 40) supporting said communication link.

13. A network node (20, 40) operable to support a communication link in a point to point communication network, and configured to counteract misalignment caused by movement of at least one node (20, 40) supporting a communication link in a point to point communication network, said network node (20, 40) comprising:
a substantially planar antenna array (200; 500) comprising a plurality of radiating elements (210; 510);
said radiating elements (210; 510) arranged to be spaced apart in accordance with a pre-selected centre signal feed wavelength;
a signal feed line arranged to feed a signal to said radiating elements such that, at said pre-selected wavelength, said antenna array beam direction is perpendicular to a surface of said substantially planar antenna array (200; 500);
misalignment logic operable to receive an indication from another network node (20, 40) supporting said communication link that misalignment caused by said movement of at least one node (20, 40) supporting said communication link in a point to point communication network is occurring, said indication comprising an indication of a signal feed wavelength to use; and
a wavelength adjuster configured to adjust said centre signal feed wavelength in dependence upon said indication to steer said antenna array beam direction to counteract said movement of said at least one node (20, 40) supporting said communication link.

14. A computer program product operable, when executed on a computer, to cause the network node of claim 13 to perform the method of any one of claims 1 to 12.

## Patentansprüche

1. Verfahren, um einer Fehlausrichtung entgegenzuwirken, die durch die Bewegung von mindestens einem Knoten (20, 40) verursacht wird, der eine Kommunikationsverbindung in einem Punkt-zu-Punkt-Kommunikationsnetzwerk unterstützt, wobei das Verfahren umfasst:
Bereitstellen eines im Wesentlichen planaren Antennenarrays (200; 500) mit einer Vielzahl von abstrahlenden Elementen (210; 510);
Anordnen der abstrahlenden Elemente (210; 510) derart, dass sie in Übereinstimmung mit einer vorgewählten zentralen Signaleinspeise-Wellenlänge beabstandet sind;
Auslegen einer Signaleinspeiseleitung zum Einspeisen eines Signals zu den abstrahlenden Elementen (210; 510) derart, dass bei der vorgewählten Wellenlänge die Strahlrichtung des Antennenarrays senkrecht zu einer Oberfläche des im Wesentlichen planaren Antennenarrays (200; 500) steht;
Empfangen, von einem anderen Netzwerkknoten (20, 40), der die Kommunikationsverbindung unterstützt, einer Anzeige, dass eine durch die Bewegung von mindestens einem Knoten (20, 40), der die Kommunikationsverbindung unterstützt, verursachte Fehlausrichtung in einem Punkt-zu-Punkt-Kommunikationsnetzwerk auftritt, wobei die Anzeige eine Angabe einer zu verwendenden Signaleinspeise-Wellenlänge umfasst; und
Anpassen der zentralen Signaleinspeise-Wellenlänge in Abhängigkeit von der Anzeige, um die Strahlrichtung des Antennenarrays derart zu steuern, dass der Bewegung des mindestens einen Knotens (20, 40), der die Kommunikationsverbindung unterstützt, entgegengewirkt wird.

2. Verfahren nach Anspruch 1, wobei das Anordnen der abstrahlenden Elemente (210; 510) in einem Abstand voneinander gemäß einer vorgewählten zentralen Signaleinspeise-Wellenlänge umfasst:
Beabstanden der benachbarten abstrahlenden Elemente (210; 510) um die Hälfte der vorgewählten Wellenlänge.

3. Verfahren nach Anspruch 1 oder Anspruch 2, wobei das Anordnen der abstrahlenden Elemente (210; 510) derart, dass sie in Übereinstimmung mit einer vorgewählten zentralen Signaleinspeise-Wellenlänge beabstandet sind, umfasst:
Anordnen der Vielzahl von abstrahlenden Elementen (210; 510) in einer Vielzahl von Reihen und Spalten.

4. Verfahren nach Anspruch 3, wobei das Auslegen einer Signaleinspeiseleitung derart, dass sie den abstrahlenden Elementen (210; 510) ein Signal derart zuführt, dass bei der vorgewählten Wellenlänge die Strahlrichtung des Antennenarrays senkrecht zu einer Oberfläche des im Wesentlichen planaren Antennenarrays (200; 500) steht, umfasst:
Versehen der Reihen mit einer seriellen Signaleinspeisung (520), die derart ausgelegt ist, dass eine Verzögerung einer ganzzahligen Anzahl von Wellenlängen bei der vorgewählten Wellenlänge zwischen benachbarten Reihen eingeführt wird; und
Bereitstellen einer parallelen Signaleinspeisung (530) innerhalb jeder Reihe, die derart ausgelegt ist, dass bei der vorgewählten Wellenlänge keine Verzögerung zwischen den abstrahlenden Elementen in einer gegebenen Reihe eingeführt wird.

5. Verfahren nach Anspruch 4, wobei das Auslegen der Signaleinspeiseleitung umfasst:
Bereitstellen einer Streifenleitung über Reihen von abstrahlenden Elementen und einer Durchkontaktierung zu einer parallelen Signaleinspeisung (520) an jeder Reihe.

6. Verfahren nach Anspruch 4, wobei das Auslegen der seriellen Signaleinspeiseleitung (520) umfasst:
Bereitstellen eines geschlitzten Verteilungswellenleiters, in dem eine ganzzahlige Wellenlängenverzögerung bei der vorgewählten Wellenlänge zwischen benachbarten Kopplungsschlitzen erreicht wird.

7. Verfahren nach einem der vorstehenden Ansprüche, wobei die Anpassung an die Einspeisesignal-Wellenlänge die Höhe der Strahlrichtung des Antennenarrays steuert, um einer vertikalen Schwankung des mindestens einen Knotens (20, 40), der die Kommunikationsverbindung unterstützt, entgegenzuwirken.

8. Verfahren nach einem der vorstehenden Ansprüche, wobei die unterstützte Kommunikationsverbindung in einem Punkt-zu-Punkt-Kommunikationsnetzwerk umfasst:
eine Verbindung, die innerhalb eines Millimeter-Wellenlängenbereichs mit hoher Verstärkung und enggebündelter Strahlbreite unterstützt wird.

9. Verfahren nach einem der vorstehenden Ansprüche, wobei die Kommunikationsverbindung eine Zeitduplexverbindung umfasst, bei der der vorwärtsgerichtete und der rückwärtsgerichtete Datenverkehr dasselbe Antennenarray verwenden, das entsprechend derselben vorgewählten Wellenlänge ausgelegt ist.

10. Verfahren nach einem der Ansprüche 1 bis 8, wobei die Kommunikationsverbindung eine Frequenzduplexverbindung umfasst, bei der der vorwärtsgerichtete und der rückwärtsgerichtete Datenverkehr unterschiedliche Antennenarrays verwenden, die jeweils entsprechend einer unterschiedlichen vorgewählten Wellenlänge ausgelegt sind.

11. Verfahren nach einem der vorstehenden Ansprüche, wobei das Verfahren umfasst:
Bestimmen, wie die zentrale Signaleinspeise-Wellenlänge anzupassen ist, durch:
Senden eines Testsignals über einen Bereich von Wellenlängen von einem Netzwerkknoten (20, 40), der die Kommunikationsverbindung unterstützt; und
Warten auf den Empfang einer Angabe einer zu verwendenden Signaleinspeise-Wellenlänge von einem anderen Netzwerkknoten (20, 40), der die Kommunikationsverbindung unterstützt, wobei die Angabe als Reaktion auf das Testsignal erzeugt wird.

12. Verfahren nach Anspruch 11, wobei das Verfahren umfasst:
periodisches Senden des Testsignals, wobei die Periodizität als Reaktion auf bestimmte lokale Bewegungsparameter des mindestens einen Netzwerkknotens (20, 40), der die Kommunikationsverbindung unterstützt, konfigurierbar ist.

13. Netzwerkknoten (20, 40) zum Unterstützen einer Kommunikationsverbindung in einem Punkt-zu-Punkt-Kommunikationsnetzwerk, das dafür konfiguriert ist, einer Fehlausrichtung entgegenzuwirken, die durch die Bewegung mindestens eines Knotens (20, 40) verursacht wird, der eine Kommunikationsverbindung in einem Punkt-zu-Punkt-Kommunikationsnetzwerk unterstützt, wobei der Netzwerkknoten (20, 40) umfasst:
ein im Wesentlichen planares Antennenarray (200; 500), das eine Vielzahl von abstrahlenden Elementen (210; 510) umfasst;
wobei die abstrahlenden Elemente (210; 510) derart angeordnet sind, dass sie in Übereinstimmung mit einer vorgewählten zentralen Signaleinspeise-Wellenlänge beabstandet sind;
eine Signaleinspeiseleitung zum Einspeisen eines Signals zu den abstrahlenden Elemente derart, dass bei der vorgewählten Wellenlänge die Strahlrichtung des Antennenarrays senkrecht zu einer Oberfläche des im Wesentlichen planaren Antennenarrays (200; 500) steht;
Fehlausrichtungslogik zum Empfangen einer Anzeige von einem anderen Netzwerkknoten (20, 40), der die Kommunikationsverbindung unterstützt, dass eine Fehlausrichtung, verursacht durch die Bewegung mindestens eines Knotens (20, 40), der die Kommunikationsverbindung in einem Punkt-zu-Punkt-Kommunikationsnetzwerk unterstützt, auftritt, wobei die Anzeige eine Angabe einer zu verwendenden Signaleinspeise-Wellenlänge umfasst; und
Wellenlängen-Anpasseinheit zum Anpassen der zentralen Signaleinspeise-Wellenlänge in Abhängigkeit von der Anzeige, um die Strahlrichtung des Antennenarrays derart zu steuern, dass der Bewegung des mindestens einen Knotens (20, 40), der die Kommunikationsverbindung unterstützt, entgegengewirkt wird.

14. Computerprogrammprodukt, das bei Ausführung auf einem Computer dafür ausgelegt ist, den Netzwerkknoten nach Anspruch 13 zu veranlassen, das Verfahren nach einem der Ansprüche 1 bis 12 durchzuführen.

## Revendications

1. Procédé pour contrecarrer un désalignement provoqué par le mouvement d'au moins un nœud (20, 40) prenant en charge une liaison de communication dans un réseau de communication point à point, ledit procédé comprenant les étapes suivantes :
utiliser un réseau d'antennes sensiblement plan (200 ; 500) comprenant une pluralité d'éléments rayonnants (210 ; 510) ;
disposer lesdits éléments rayonnants (210 ; 510) pour qu'ils soient espacés conformément à une longueur d'onde centrale présélectionnée d'alimentation en signal ;
disposer une ligne d'alimentation en signal pour appliquer un signal auxdits éléments rayonnants (210 ; 510), de manière que, à ladite longueur d'onde présélectionnée, la direction de faisceau dudit réseau d'antennes soit perpendiculaire à une surface dudit réseau d'antennes sensiblement plan (200 ; 500) ;
recevoir, en provenance d'un autre nœud de réseau (20, 40) prenant en charge ladite liaison de communication une indication de la survenance d'un désalignement provoqué par ledit mouvement d'au moins un nœud (20, 40) prenant en charge ladite liaison de communication dans un réseau de communication point à point, ladite indication comprenant une indication d'une longueur d'onde d'alimentation en signal à utiliser ; et
ajuster ladite longueur d'onde centrale d'alimentation en signal en fonction de ladite indication pour orienter ladite direction de faisceau de réseau d'antennes afin de contrecarrer ledit mouvement dudit au moins un nœud (20, 40) prenant en charge ladite liaison de communication.

2. Procédé selon la revendication 1, dans lequel la disposition desdits éléments rayonnants (210 ; 510) pour les espacer conformément à une longueur d'onde centrale présélectionnée d'alimentation en signal comprend l'étape suivante : espacer lesdits éléments rayonnants (210 ; 510) adjacents de la moitié de ladite longueur d'onde présélectionnée.

3. Procédé selon la revendication 1 ou la revendication 2, dans lequel la disposition desdits éléments rayonnants (210 ; 510) pour les espacer conformément à une longueur d'onde centrale présélectionnée d'alimentation en signal comprend l'étape suivante : disposer ladite pluralité d'éléments rayonnants (210 ; 510) en une pluralité de rangées et de colonnes.

4. Procédé selon la revendication 3, dans lequel la disposition d'une ligne d'alimentation en signal pour appliquer un signal auxdits éléments rayonnants (210 ; 510) de manière que, à ladite longueur d'onde présélectionnée, ladite direction de faisceau de réseau d'antennes soit perpendiculaire à une surface dudit réseau d'antennes sensiblement plan (200 ; 500) comprend les étapes suivantes :
doter lesdites rangées d'une alimentation en signal en série (520) disposée de manière qu'un retard d'un nombre entier de longueurs d'onde à ladite longueur d'onde présélectionnée soit introduit entre des rangées adjacentes ; et placer une alimentation en signal en parallèle (530) au sein de chaque rangée, disposée de manière qu'à ladite longueur d'onde présélectionnée, aucun retard ne soit introduit entre des éléments rayonnants d'une rangée donnée quelconque.

5. Procédé selon la revendication 4, dans lequel la disposition de ladite ligne d'alimentation en signal comprend l'étape suivante : placer une ligne à ruban sur des rangées d'éléments rayonnants et une connexion par le biais d'une alimentation en signal en parallèle (520) à chaque rangée.

6. Procédé selon la revendication 4, dans lequel la disposition de ladite ligne d'alimentation en signal en série (520) comprend l'étape suivante : placer un guide d'ondes de distribution à fentes dans lequel un retard de longueur d'onde entier à ladite longueur d'onde présélectionnée est obtenu entre des fentes de couplage adjacentes.

7. Procédé selon l'une quelconque des revendications précédentes, dans lequel ledit ajustement à ladite longueur d'onde d'alimentation en signal oriente l'élévation de ladite direction de faisceau de réseau d'antennes pour contrecarrer un balancement vertical dudit au moins un nœud (20, 40) prenant en charge ladite liaison de communication.

8. Procédé selon l'une quelconque des revendications précédentes, dans lequel ladite liaison de communication prise en charge dans un réseau de communication point à point comprend : une liaison prise en charge à l'intérieur d'une bande de longueurs d'onde millimétriques ayant un gain élevé et une largeur étroite d'étalement de faisceau.

9. Procédé selon l'une quelconque des revendications précédentes, dans lequel ladite liaison de communication comprend une liaison en duplex à répartition dans le temps, sur laquelle le trafic de données aller et retour utilise le même réseau d'antennes disposé conformément à la même longueur d'onde présélectionnée.

10. Procédé selon l'une quelconque des revendications 1 à 8, dans lequel ladite liaison de communication comprend une liaison en duplex à répartition en fréquence, sur laquelle le trafic de données aller et retour utilise des réseaux d'antennes différents, disposés chacun conformément à une longueur d'onde présélectionnée différente.

11. Procédé selon l'une quelconque des revendications précédentes, dans lequel ledit procédé comprend les étapes suivantes :
déterminer comment ajuster ladite longueur d'onde centrale d'alimentation en signal :
en émettant un signal de test sur une gamme de longueurs d'onde, à partir d'un nœud de réseau (20, 40) prenant en charge ladite liaison de communication ; et
attendre la réception de l'indication d'une longueur d'onde d'alimentation en signal à utiliser en provenance d'un autre nœud de réseau (20, 40) prenant en charge ladite liaison de communication, ladite indication étant générée en réponse audit signal de test.

12. Procédé selon la revendication 11, dans lequel ledit procédé comprend l'étape suivante :
émettre périodiquement ledit signal de test, ladite périodicité étant configurable en réponse à des paramètres déterminés de mouvement local dudit au moins un nœud de réseau (20, 40) prenant en charge ladite liaison de communication.

13. Nœud de réseau (20, 40) permettant de prendre en charge une liaison de communication dans un réseau de communication point à point, et configuré pour contrecarrer un désalignement provoqué par le mouvement d'au moins un nœud (20, 40) prenant en charge une liaison de communication dans un réseau de communication point à point, ledit nœud de réseau (20, 40) comprenant :
un réseau d'antennes sensiblement plan (200 ; 500) comprenant une pluralité d'éléments rayonnants (210 ; 510) ;
lesdits éléments rayonnants (210 ; 510) disposés pour être espacés conformément à une longueur d'onde centrale présélectionnée d'alimentation en signal ;
une ligne d'alimentation en signal disposée pour appliquer un signal auxdits éléments rayonnants, de manière que, à ladite longueur d'onde présélectionnée, ladite direction de faisceau de réseau d'antennes soit perpendiculaire à une surface dudit réseau d'antennes sensiblement plan (200 ; 500) ;
une logique de désalignement permettant de recevoir en provenance d'un autre nœud de réseau (20, 40) prenant en charge ladite liaison de communication une indication de la survenance d'un désalignement provoqué par ledit mouvement d'au moins un nœud (20, 40) prenant en charge ladite liaison de communication dans un réseau de communication point à point, ladite indication comprenant une indication d'une longueur d'onde d'alimentation en signal à utiliser ; et
une unité d'ajustement de longueur d'onde, configurée pour ajuster ladite longueur d'onde centrale d'alimentation en signal en fonction de ladite indication afin d'orienter ladite direction de faisceau de réseau d'antennes pour contrecarrer ledit mouvement dudit au moins un nœud (20, 40) prenant en charge ladite liaison de communication.

14. Produit-programme informatique permettant, lorsqu'il est exécuté sur un ordinateur, de faire mettre en œuvre au nœud de réseau selon la revendication 13 le procédé selon l'une quelconque des revendications 1 à 12.
